# EUROPEAN PATENT APPLICATION

(11) **EP 1 253 183 A1**
(43) Date of publication of application: **30.10.2002**
(21) Application number: 00979930.5
(22) Date of filing: 06.12.2000
(51) Int. Cl.: C10M 105/52, C10M 105/04, C10M 145/26, C10N 30/00

(54) **HYDRAULIC FLUID AND REFRIGERATING APPARATUS**

(30) Priority: 28.12.1999 JP 37344599
(71) Applicant: Daikin Industries, Ltd., Osaka-shi, Osaka 530-8323 (JP)
(72) Inventor: TAIRA, Shigeharu, Shiga-seisakusho of Daikin Ind, Kusatsu-shi, Shiga 525-0044 (JP); MATSUURA, Hideki, Rinkai-kojo, Daikin Industries, Sakai-shi, Osaka 592-8331 (JP)
(74) Representative: HOFFMANN EITLE
(86) International application number: JP0008612
(87) International publication number: WO01048124

(57) **Abstract**

There is provided a working fluid and a refrigerating machine for preventing clogging in a depressurizing mechanism even with use of HFC-base refrigerants. A refrigeration circuit 1 is filled with a working fluid composed of an HFC-base refrigerant containing 50 wt% or more R32 and a mixed refrigerating machine oil. The mixed refrigerating machine oil is made up of a synthetic oil such as an ether oil and an ester oil and a PAG oil as a clogging preventive, and the PAG oil accounts for 1 to 15 wt% of the mixed refrigerating machine oil.

## Description

### TECHNICAL FIELD

The present invention relates to a working fluid for use in a refrigerating machine and to a refrigerating machine.

### BACKGROUND ART

In recent years, in the field of refrigerating machines, HCFC (hydrochlorofluorocarbon)-base refrigerants have become targets of regulation for preventing depletion of the ozone layer. Consequently, HFC (hydrofluorocarbon)-base refrigerants have begun to be used as alternative refrigerants. Synthetic oils such as an ether oil and an ester oil are used as refrigerating machine oils for use with the HFC-base refrigerants because mutual solubility with HFC-base refrigerants is one of the important characteristics of the refrigerating machine oils.

However, since the synthetic oils such as an ether oil and an ester oil have strong polarity, they have a tendency to dissolve residual impurities excluding HFC-base refrigerants. Accordingly, a refrigerating machine with use of a working fluid composed of a HFC-base refrigerant and a synthetic oil has a problem that a depressurizing mechanism composed of a motor-driven expansion valve or a capillary is susceptible to clogging caused by sludge and contamination generated after evaporation of the HFC-base refrigerant. If the clogging occurs, the refrigerating machine becomes inoperative.

### DISCLOSURE OF THE INVENTION

Accordingly, it is an object of the present invention to provide a working fluid and a refrigerating machine for preventing clogging in a depressurizing mechanism even with use of HFC-base refrigerants.

In order to accomplish the above object, a working fluid in one aspect of the present invention comprises:
an HFC-base refrigerant containing R32 at at least 50 wt%; and
a mixed refrigerating machine oil composed of a synthetic oil as a base oil and a PAG (Polyproalkyl Glycol) oil as a clogging protective,
the PAG oil accounting for 1 to 15 wt% of the mixed refrigerating machine oil.

In the case of the working fluid composed of an HFC-base refrigerant containing 50 wt% or more R32 and a mixed refrigerating machine oil made up of a synthetic oil such as ether and ester as a base oil and 1 to 15 wt% PGA oil as a clogging preventive, contamination and sludge generated by use of a synthetic oil with strong polarity is dissolved by effect of the PAG oil, so that clogging in the depressurizing mechanisms is prevented. Also, good mutual solubility between the HFC-base refrigerant and the mixed refrigerating machine oil provides satisfactory lubrication, thereby improving reliability of compressors. In addition, since the working fluid is excellent in electric insulation, electrical failure of the refrigerating machine is prevented.

More particularly, if the ratio of a PAG oil to the mixed refrigerating machine oil having a synthetic oil as a base oil is in excess of 1 wt%, improvement of a clogging rate is found. If the ratio of the PAG oil increases over 1 wt%, the clogging rate is improved with increase of PAG oil wt%. If the ratio of the PAG oil is in excess of 15 wt%, clogging prevention efficiency does not show substantial change from the clogging prevention efficiency at the ratio of 15 wet%.

If a ratio of a PAG oil as a clogging preventive to a synthetic oil as a base oil such as an ether oil and an ester oil is increased, mutual solubility (compatibility) between a mixed refrigerating machine oil and an HFC-base refrigerant containing 50 wt% or more R32 is deteriorated. However, unless a ratio of the PAG oil to the mixed refrigerating machine oil exceeds 15 wt%, the compatibility will not deteriorate so much as becoming a substantial problem.

In terms of electric insulation of the working fluid, if a PAG oil contained in a mixed refrigerating machine oil exceeds 15 wt%, electric insulation of the working fluid is decreased, which generates a large amount of leakage current, thereby making the working fluid improper for use in refrigerating machines. A PAG oil accounting for 15 wt% or less in the mixed refrigerating machine oil will not cause a substantial problem of leakage current due to the working fluid.

In one embodiment, the PAG oil accounts for 5 to 15 wt% of the mixed refrigerating machine oil.

If a ratio of the PAG oil to the mixed refrigerating machine oil is in excess of 5 wt%, considerable clogging prevention efficiency is obtained.

The working fluid in another aspect of the present invention comprises:
an HFC-base refrigerant containing R32 at at least 50 wt%; and
a mixed refrigerating machine oil composed of a synthetic oil as a base oil and a chain hydrocarbon-base oil as a clogging protective,
the chain hydrocarbon-base oil accounting for 1 to 15 wt% of the mixed refrigerating machine oil.

In one embodiment, the chain hydrocarbon-base oil accounts for 5 to 15 wt% of the mixed refrigerating machine oil.

The above-described working fluid has a chain hydrocarbon-base oil substituted for the PAG oil, which implements the same operation and effect as those in the case of using the PAG oil.

The refrigerating machine in another aspect of the present invention fills any one of the working fluids into a refrigeration circuit.

Since the refrigerating machine in another aspect of the present invention uses an HFC-base refrigerant containing at least 50 wt% R32, it does not destroy the ozone layer and achieves good COP (coefficient of performance). Further, since the working fluid is composed of an HFC-base refrigerant containing at least 50 wt% R32 and a mixed refrigerating machine oil containing a synthetic oil and 1 to 15 wt%, more preferably 5 to 15 wt% PAG oil or a chain hydrocarbon-base oil, occurrence of clogging in the depressurizing mechanism is prevented, good compatibility between the HFC-base refrigerant and the mixed refrigerating machine oil increases reliability of the compressor, and high electric insulation prevents occurrence of leakage current. Therefore, the refrigerating machine of the present invention implements high reliability.

### BRIEF DESCRIPTION OF THE DRAWINGS

Fig. 1 is a refrigeration circuit diagram of an air conditioner in an embodiment of the present invention;
Fig. 2 is a graph showing relationship between wt% of a PAG oil to a mixed refrigerating machine oil and a clogging rate;
Fig. 3 is a graph showing relationship between wt% of a PAG oil to a mixed refrigerating machine oil and compatibility of R32 with the mixed refrigerating machine oil; and
Fig. 4 is a graph showing relationship between wt% of a PAG oil to a mixed refrigerating machine oil and leakage current.

### BEST MODE FOR CARRYING OUT THE INVENTION

The present invention will be hereinafter described in detail in conjunction with the embodiment with reference to accompanying drawings.

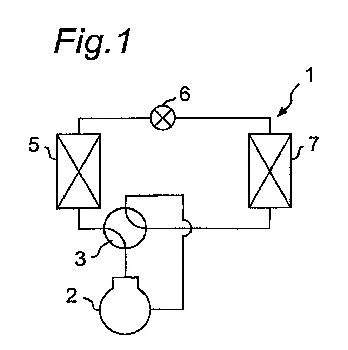

Fig. 1 shows a refrigeration circuit 1 of an air conditioner as one example of a refrigerating machine. The refrigeration circuit 1 is made up of a compressor 2, a four-way changeover valve 3, an outdoor heat exchanger 5, a motor-driven expansion valve 6 exemplifying a depressurizing mechanism, and an indoor heat exchanger 7, each connected in sequence.

The refrigeration circuit 1 is filled with a working fluid composed of an HFC-base refrigerant containing 50 wt% or more R32 and a mixed refrigerating machine oil. The mixed refrigerating machine oil is made up of an ether oil exemplifying a synthetic oil, and a PAG (polyproalkyl glycol) oil as a clogging preventive. The PAG oil accounts for 1 to 15 wt% of the mixed refrigerating machine oil. It is noted that R125, R22, carbon dioxide gas or the like is used as a remaining refrigerant component of the HFC-base refrigerant containing at least 50 wt% R32.

In the case of the working fluid composed of an HFC-base refrigerant containing 50 wt% or more R32 and a mixed refrigerating machine oil containing 1 to 15 wt% PAG oil in addition to an ether oil as a base oil, if contamination and sludge are generated by a synthetic oil with strong polarity, the PAG oil dissolves the contamination and sludge, thereby preventing clogging in places such as the motor-driven expansion valve 6, while good compatibility between the HFC-base refrigerant containing 50 wt% or more R32 and the mixed refrigerating machine oil secures lubrication of the compressor 2. Also, the working fluid provides good electric insulation. This imparts extremely high reliability to the air conditioner. As shown above, good compatibility, good clogging preventing performance, and good electric insulation of the working fluid are attributed to synergism brought by an HFC-base refrigerant containing 50 wt% or more R32, a mixed refrigerating machine oil having an ether oil as a base oil, and a PAG oil contained at 1 to 15 wt% in the mixed refrigerating machine oil.

The working fluid uses an HFC-base refrigerant containing at least 50 wt% R32, so that it does not destroy the ozone layer and good COP (coefficient of performance) is provided.

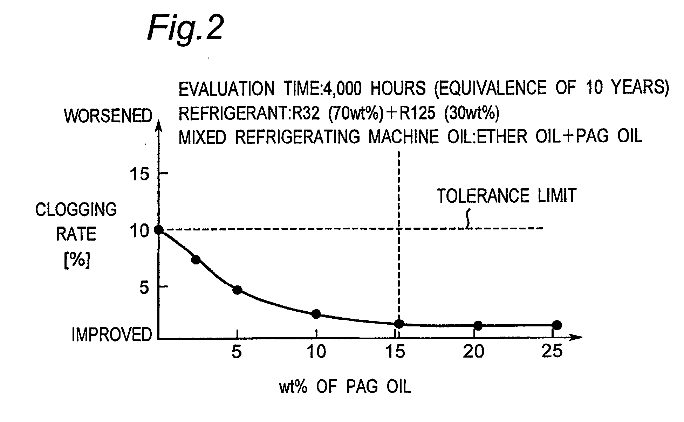

Fig. 2 shows a clogging rate with change of wt% of a PAG oil to a mixed refrigerating machine oil in the case of the working fluid composed of an HFC-base refrigerant containing 70 wt% R32 and 30 wt% R125 and the mixed refrigerating machine oil made up of an ether oil (Idemitsu Kosan Co. Ltd.: Product No. FVC68D) and a PAG oil.

As shown in Fig. 2, increase of wt% of the PAG oil to the mixed refrigerating machine oil reduces the clogging rate. Particularly, when wt% of the PAG oil to the mixed refrigerating machine oil is in excess of 5 wt%, the clogging rate becomes extremely small and very satisfactory for practical usage. It is noted although not clearly shown in Fig. 2, improvement of the clogging rate is confirmed at a ratio of the PAG oil in excess of 1 wt% to the mixed refrigerating machine oil. Also, as shown in Fig. 2, if the ratio of the PAG oil is in excess of 15 wt%, clogging prevention efficiency does not show substantial change from the clogging prevention efficiency at the ratio of 15 wet%. In view of the clogging rate, it is found out that a ratio of the PAG oil to the mixed refrigerating machine oil is preferably 1 to 15 wt%, and more preferably 5 to 15 wt%. It is noted that the clogging rate refers to a percentage of a flow rate decreased from the flow rate without clogging, so that with the flow rate without clogging of a capillary being 100%, the flow rate of, for example, 90% signifies that the clogging rate thereof is 10%.

This tendency is almost the same in the case where an ester oil is substituted for the ether oil as a base oil of the mixed refrigerating machine oil, or a R32 single refrigerant is substituted for the HFC-base refrigerant as a refrigerant. It is found out that almost identical tendency is obtainable if the HFC-base refrigerant containing 50 wt% or more R32 is used.

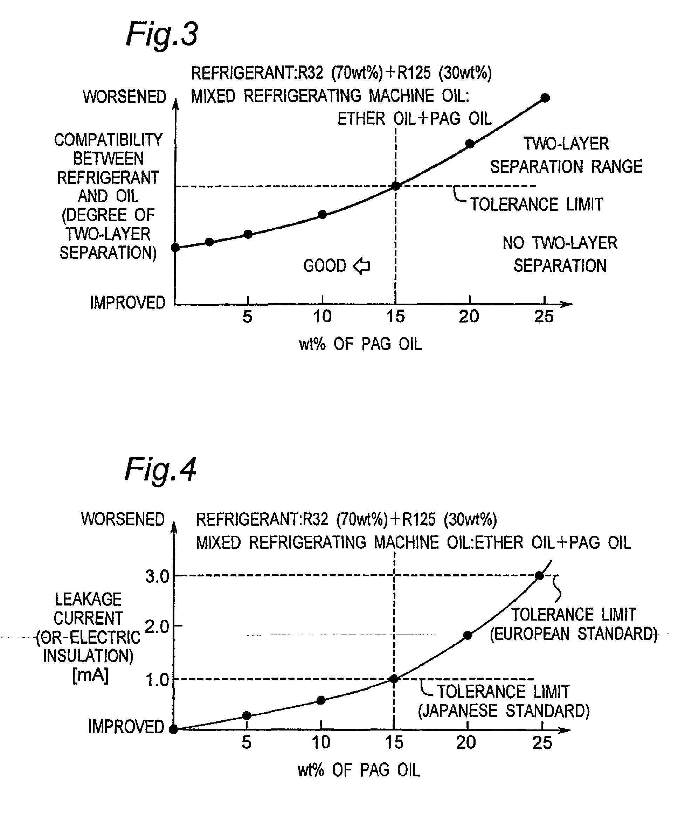

Fig. 3 shows compatibility between an HFC-base refrigerant and a mixed refrigerating machine oil with change of wt% of a PAG oil to the mixed refrigerating machine oil in the case of the working fluid composed of the HFC-base refrigerant containing 70 wt% R32 and 30 wt% R125 and the mixed refrigerating machine oil made up of an ether oil (Idemitsu Kosan Co. Ltd.: Product No. FVC68D) and the PAG oil.

As shown in Fig. 3, increase of wt% of the PAG oil to the mixed refrigerating machine oil worsens compatibility between the mixed refrigerating machine oil and the HFC-base refrigerant, and when wt% of the PAG oil is in excess of 15 wt%, the compatibility is worsened beyond a tolerance limit, causing two-layer separation. It is also found out that unless a ratio of the PAG oil to the mixed refrigerating machine oil exceeds 15 wt%, a substantial problem due to the insufficiency of compatibility will not occur. In other words, unless the ratio of the PAG oil is in excess of 15 wt%, tribology (lubrication) of the compressor 2 will not be affected and therefore reliability of the air conditioner will not be impaired.

This tendency is almost the same in the case where an ester oil is substituted for the ether oil as a base oil of the mixed refrigerating machine oil, or an R32 single refrigerant is substituted for the HFC-base refrigerant as a refrigerant. It is found out that almost identical tendency is obtainable if the HFC-base refrigerant containing 50 wt% or more R32 is used.

Fig. 4 shows leakage current i.e. electric insulation measured with change of wt% of a PAG oil to a mixed refrigerating machine oil in the case of the working fluid composed of an HFC-base refrigerant containing 70 wt% R32 and 30 wt% R125 and the mixed refrigerating machine oil made up of an ether oil (Idemitsu Kosan Co. Ltd.: Product No. FVC68D) and the PAG oil.

As shown in Fig. 4, increase of wt% of the PAG oil to the mixed refrigerating machine oil increases leakage current and deteriorates electric insulation. When wt% of the PAG oil to the mixed refrigerating machine oil is in excess of 15 wt%, leakage current exceeds a tolerance limit of 1mA (Japanese Standard) . It is also found out that unless a ratio of the PAG oil to the mixed refrigerating machine oil exceeds 15 wt%, a substantial problem due to the leakage current will not occur.

This tendency is almost the same in the case where an ester oil is substituted for the ether oil as a base oil of the mixed refrigerating machine oil, or an R32 single refrigerant is substituted for the HFC-base refrigerant as a refrigerant. It is found out that almost identical tendency is obtainable if the HFC-base refrigerant containing 50 wt% or more R32 is used.

In view of the above-described clogging prevention efficiency, compatibility, and leakage current (electric insulation), it is found out that the working fluid composed of an HFC-base refrigerant containing 50 wt% or more R32 and a mixed refrigerating machine oil made up of a synthetic oil such as an ether oil and an ester oil and a PAG oil requires 1 to 15 wt% of the PAG oil in the mixed refrigerating machine oil, and the most preferable wt% thereof is 5 to 15 wt%. The above working fluid is chemically stable and free from deterioration in a long period of time.

Also, the working fluid is not easily clogged, which makes it possible to use inexpensive capillaries instead of motor-driven expansion valves in air conditioners.

In the case where a chain hydrocarbon-base oil is used instead of the PAG oil, there are obtained substantially the same characteristics as those in Figs. 1 2 and 3, though not shown therein. This indicates that the working fluid composed of an HFC-base refrigerant containing 50 wt% or more R32 and a mixed refrigerating machine oil made up of a synthetic oil such as an ether oil and an ester oil and a chain hydrocarbon-base oil requires 1 to 15 wt% chain hydrocarbon-base oil in the mixed refrigerating machine oil, and the most preferable wt% thereof is 5 to 15 wt%.

Although in the above embodiment, the air conditioner has been described as an example of a refrigerating machine, the refrigerating machine may be an ice maker, a refrigerator, and a refrigerating plant.

As is clear from the above description, the working fluid of the present invention is composed of an HFC-base refrigerant containing at least 50 wt% R32 and a mixed refrigerating machine oil made up of a synthetic oil such as an ether oil and an ester oil as a base oil and a PAG oil as a clogging preventive of 1 to 15 wt% to the mixed refrigerating machine oil, which brings the advantages that clogging in a depressurizing mechanism such as a capillary and a motor-driven expansion valve may be prevented, failure of compressors may be prevented due to good compatibility between the HFC-base refrigerant and the mixed refrigerating machine oil, and sufficient electric insulation is provided.

The working fluid in one embodiment has 5 to 15 wt% of a PAG oil contained in the mixed refrigerating machine oil, which implements extreme clogging prevention effect.

The working fluid in one embodiment has a chain hydrocarbon-base oil substituted for the PAG oil, and therefore implements the same effect as in the case of using the PAG oil.

The refrigerating machine of the present invention fills any one of the working fluids into a refrigeration circuit, which brings the advantages that clogging in depressurizing mechanisms in the refrigeration circuit is prevented, reliability of the compressor is improved due to good lubrication provided by satisfactory compatibility between the HFC-base refrigerant and the mixed refrigerating machine oil, and sufficient electric insulation provides high reliability of the refrigeration circuit.

## Claims

1. A working fluid comprising:
an HFC-base refrigerant containing R32 at at least 50 wt%; and
a mixed refrigerating machine oil composed of a synthetic oil as a base oil and a PAG oil as a clogging protective,
the PAG oil accounting for 1 to 15 wt% of the mixed refrigerating machine oil.

2. The working fluid as defined in Claim 1, wherein the PAG oil accounts for 5 to 15 wt% of the mixed refrigerating machine oil.

3. A working fluid comprising:
an HFC-base refrigerant containing R32 at at least 50 wt%; and
a mixed refrigerating machine oil composed of a synthetic oil as a base oil and a chain hydrocarbon-base oil as a clogging protective,
the chain hydrocarbon-base oil accounting for 1 to 15 wt% of the mixed refrigerating machine oil.

4. The working fluid as defined in Claim 3, wherein the chain hydrocarbon-base oil accounts for 5 to 15 wt% of the mixed refrigerating machine oil.

5. A refrigerating machine comprising the working fluid of Claim 1 being filled in a refrigeration circuit.

6. A refrigerating machine comprising the working fluid of Claim 3 being filled in a refrigeration circuit.
